# EUROPEAN PATENT APPLICATION

(11) **EP 3 791 718 A1**
(43) Date of publication of application: **17.03.2021**
(21) Application number: 20813599.6
(22) Date of filing: 27.04.2020
(51) Int. Cl.: A01M 29/10, A01M 29/16

(54) **WILD ANIMAL REPELLING DEVICE**

(30) Priority: 24.05.2019 JP 2019097485
(71) Applicant: Ohta Seiki Co., Ltd., Hokkaido 079-0304 (JP)
(72) Inventor: OHTA, Yuji, Sorachi-gun, Hokkaido 079-0304 (JP); SASAKI, Syushi, Asahikawa-shi, Hokkaido 070-0032 (JP); MIYASAKA, Motohiro, Sapporo-shi, Hokkaido 063-0841 (JP)
(74) Representative: Mewburn Ellis LLP
(86) International application number: PCT/JP2020/017958
(87) International publication number: WO 2020/241149

(57) **Abstract**

A wild animal repulsing apparatus for intimidating and repulsing wild animals appearing in agriculture cultivated areas, ranches or villages, includes a light emitting unit having a plurality of light emitting elements, a sound generation unit for generating intimidating sound used to threaten the wild animals, a control unit for controlling light emitting operations of the light emitting unit and sound generating operations of the sound generation unit, and an appearance providing unit having an outer shape resembling in appearance of an animal and being capable of arranging so that two of the light emitting elements are appeared as eyes of the animal. The control unit controls the light emitting unit to blink the plurality of light emitting elements at a frequency of 18-24 Hz, and controls the sound generation unit so as to generate the intimidating sound with 80 dB or more at stopping interval of 15 minutes or more when no wild animal is appeared.

## Description

### FIELD OF THE INVENTION

The present invention relates to a wild animal repulsing apparatus for intimidating and repelling wild animals appearing frequently in agriculture cultivated areas, ranches or villages.

### BACKGROUND ART

In recent years, due to wild animal protection, human house environment expansion, depopulation of the farm villages, and decrease of hunters, the haunting area of wild animals such as deer and wild boars has enlarged and thus damages to farm products becomes serious.

In order to protect the farm products from the harmful wild birds and beasts, various counter measures such as setting of electric fences (described in Patent Document 1 for example), driving away of the wild animals by unit of sound such as explosions or supersonic wave (described in Patent Document 2 for example), dispersion of the repellent agent with smell of feces and urine of the natural enemy such as a lion or a wolf, and hunting and capture of the harmful animals are performed till now.

### RELATED ART DOCUMENT

### PATENT DOCUMENT

Patent Document 1: Japanese patent publication No. HEI 09-098708A
Patent Document 2: Japanese Patent publication No. 2000-316460A

### SUMMARY OF THE INVENTION

### PROBLEM TO BE SOLVED BY THE INVENTION

However, in case of using the electric fence as described in Patent Document 1, the setting cost and the maintenance cost were expensive, and there was a problem of inviting electric shock.

Also, in case of driving away the wild animals by means of the explosion sound as described in Patent Document 2, only temporary evacuation effects could be obtained but this effect could not be kept for long time. Namely, because of possible learning functions of the wild animals, it was quite difficult to continuously keep awareness of danger for the wild animals.

Further, in case of dispersing the repellent agent, there are problems in the continuity of the effect and also in enough evacuation effects of the wild animals under the circumstances. Still further, the extermination of the harmful animals by hunting and capture had problems of restrictive, low continuance, poor efficiency, high risk of the accident, and aging/decrease of the hunters. Also, the hunting and capture could not be performed at night.

The present invention is aimed to resolve the aforementioned problems, and an object of the present invention is to provide a wild animal repulsing apparatus, whereby it is possible to save the setting cost, to effectively repel wild animals and to expect durable in evacuation effects.

Another object of the present invention is to provide a wild animal repulsing apparatus, whereby intimidating and evacuation effects of the wild animals can be obtained in a wide area, and growth management of farm products or rearing management of domestic animals can be performed.

### MEANS TO SOLVE THE PROBLEM

According to the present invention, a wild animal repulsing apparatus for intimidating and repulsing wild animals appearing in agriculture cultivated areas, ranches or villages, includes a light emitting unit having a plurality of light emitting elements, a sound generation unit for generating intimidating sound used to threaten the wild animals, a control unit for controlling light emitting operations of the light emitting unit and sound generating operations of the sound generation unit, and an appearance providing unit having an outer shape resembling in appearance of an animal and being capable of arranging so that two of the light emitting elements are appeared as eyes of the animal. The control unit controls the light emitting unit to blink the plurality of light emitting elements at a frequency of 18-24 Hz, and controls the sound generation unit so as to generate the intimidating sound with 80 dB or more at stopping interval of 15 minutes or more when no wild animal is appeared.

Since the apparatus has the light emitting unit with a plurality of light emitting elements, the sound generation unit for generating intimidating sound used to threaten the wild animals, and the appearance providing unit having an outer shape resembling in appearance of an animal that intimidates the wild animals, the light emitting unit blinks at a frequency of 18-24 Hz, and the sound generation unit generates the intimidating sound with 80 dB or more at stopping interval of 15 minutes or more when no wild animal is appeared, setting cost of the apparatus can be saved, wild animals can be effectively repelled and durability in evacuation effects can be expected.

It is preferred that the appearance providing unit has an outer shape resembling in appearance of a wolf and is configured to be capable of turning a head portion of the wolf in an angle range of 60-120 degrees. Thus, at least part of the light emitting unit, that is, two of the light emitting elements appeared as eyes can be moved. As a result, intimidating and evacuation effects against the wild animals from the front and also the durability of the effect can be improved.

It is also preferred that the apparatus further includes a movement unit for moving the appearance providing unit mounted thereon, and that the control unit controls to move the movement unit. Thus, intimidating and evacuation effects against the wild animals more closely and the durability of the effect can be improved. That is, intimidating and evacuation effects in a wide area can be expected.

It is further preferred that the apparatus further includes at least one sensing unit to detect appearance of the wild animal, and that the control unit is configured to operate the light emitting unit and the sound generation unit when the wild animal is detected by the at least one sensing unit. Thus, the wild animals can be effectively repelled and also intimidating and evacuation effects in a wide area can be expected.

It is still further preferred that the light emitting unit includes a control system including LED elements capable of working in an environment of -5 °C or less. Thereby, the apparatus can be used in cold districts.

It is further preferred that the sound generation unit is capable of producing sound in four or more patterns including at least one kind of a bark of wolf, a caution cry of deer, a cry of dog, a human voice and a sound of gun. Thus, an effect for preventing the wild animals to learn can be obtained and therefore higher intimidating and evacuation effects can be expected.

It is further preferred that the light emitting unit includes LED elements with a light emission wavelength in a range of 400-600 nm. Since the light wavelength in a range of 400-600 nm, that is easy to perceive for the wild animals, is used, higher intimidating and evacuation effects can be expected.

It is still further preferred that the movement unit includes a four-legs walking robot. Therefore, the apparatus can become easy to move even in an off or bad road.

It is further preferred that the apparatus further includes at least one of a camera and environmental sensors for measuring temperature, humidity, wind velocity, atmospheric pressure, illuminance, ultraviolet rays, acceleration, sound pressure, rainfall, snowfall, powder dust and radioactivity, so as to perform growth management of farm products or rearing management of domestic animals when no wild animal appears.

### EFFECT OF THE INVENTION

The apparatus has the light emitting unit with a plurality of light emitting elements each of which emits light flux with 120 lumens or more, and the sound generation unit for generating intimidating sound used to threaten the wild animals . The light emitting unit blinks at a frequency of 18-24 Hz, and the sound generation unit generates the intimidating sound with 80 dB or more at stopping interval of 15 minutes or more when no wild animal is appeared. Thus, setting cost of the apparatus can be saved, wild animals can be effectively repelled and durability in evacuation effects can be expected. As a result, possible damages such as farm products can decrease.

Also, the apparatus has the appearance providing unit having an outer shape resembling in appearance of a wolf and the head portion of the wolf capable of turning a head of the wolf in an angle range of 60-120 degrees. Therefore, intimidating and evacuation effects against the wild animals and also the durability of the effect can be improved.

Further, the apparatus has a movement unit for moving the appearance providing unit mounted thereon, and this movement unit is moved within a predetermined area. Thus, intimidating and evacuation effects against the wild animals and the durability of the effect can be improved. That is, intimidating and evacuation effects in a wide area can be expected.

Still further, the apparatus has at least one sensing unit to detect appearance of the wild animal. For example, a plurality of sensing unit are arranged with separating distances each other. The light emitting unit and the sound generation unit are operated when the wild animal is detected by the sensing unit. Thus, the wild animals can be effectively repelled and also intimidating and evacuation effects in a wide area can be expected.

### BRIEF DESCRIPTION OF DRAWINGS

FIG. 1 is an external view seen from the front schematically illustrating constitution of a wild animal repulsing apparatus in an embodiment according to the present invention;
FIG. 2 is a block diagram schematically illustrating constitution of the wild animal repulsing apparatus shown in FIG. 1;
FIG. 3 is a block diagram schematically illustrating constitution of a control unit of the wild animal repulsing apparatus shown in FIG. 1;
FIG. 4 is an imaging view schematically illustrating constitution of a wild animal repulsing apparatus in another embodiment according to the present invention;
FIG. 5 is an external view seen from the front schematically illustrating constitution of a wild animal repulsing apparatus in further embodiment according to the present invention; and
FIG. 6 is an external view seen from the front schematically illustrating constitution of a wild animal repulsing apparatus in still further embodiment according to the present invention.

### EMBODIMENTS FOR CARRYING OUT THE INVNTION

Hereinafter embodiments of a wild animal repulsing apparatus according to the present invention will be described with reference to the drawings.

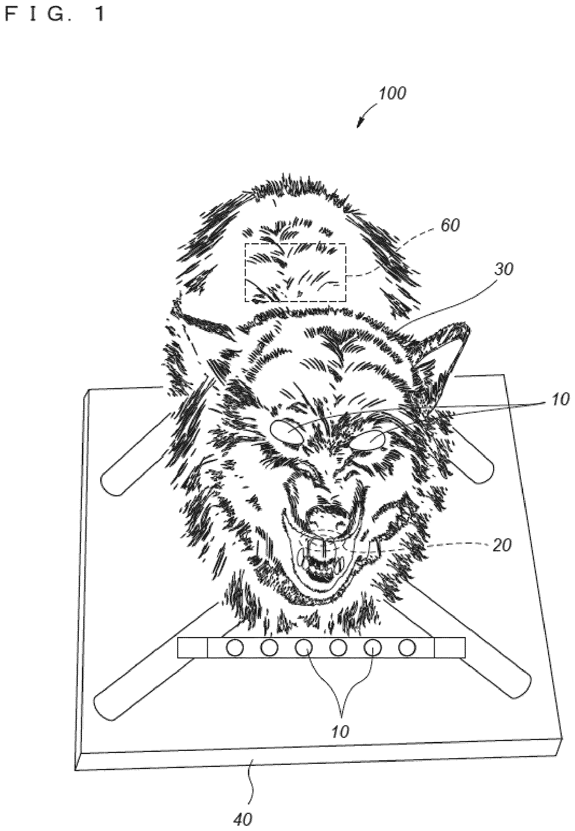

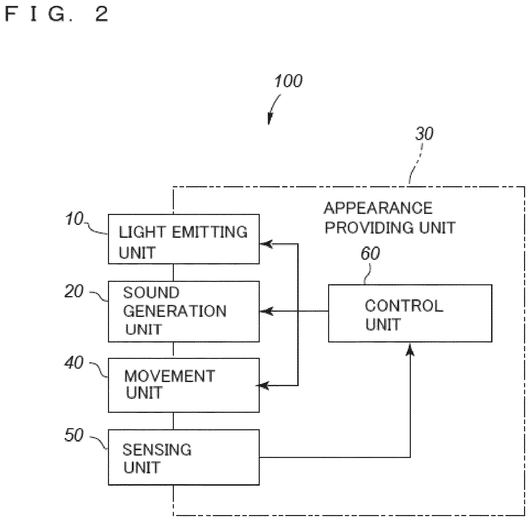

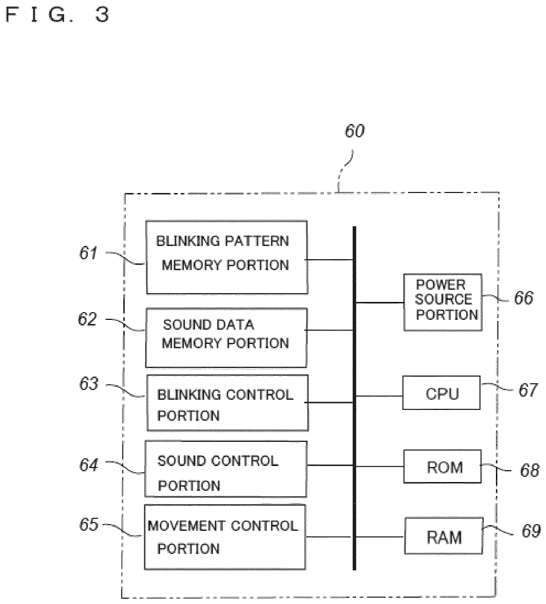

FIG. 1 schematically illustrates a constitution of a wild animal repulsing apparatus 100 in an embodiment according to the present invention, FIG. 2 schematically illustrates overall constitution of the wild animal repulsing apparatus 100 of FIG. 1, and FIG. 3 schematically illustrates constitution of a control unit 60.

As shown in FIGS. 1 and 2, the wild animal repulsing apparatus 100 of this embodiment includes a light emitting unit 10, a sound generation unit 20, an appearance providing unit 30 with an outer shape resembling in appearance of a wolf, a movement unit 40, a sensing unit 50 and the control unit 60.

The light emitting unit 10 is configured by a plurality of light emitting elements. For example, each light emitting element may be formed by a high-brightness LED element with a light flux of 120 lumen or more. As a result, the wild animal can perceive the emission of light during not only the night but also the daytime. The LED elements and also the control unit are capable of working in an environment of -5 °C or less. Namely, it is desired to use a control system including the LED element capable of operating in outdoor cold districts. At least two of light emitting elements are necessary as for light emitting unit 10. These two light emitting elements (of the light emitting unit 10) are arranged to locate at positions of the eyes of the wolf of the appearance providing unit 30. In case that three or more light emitting elements (of the light emitting unit 10) are used, one or more light emitting element may be arranged at any position other than the position of the eyes of the wolf, for example, may be arranged at the position of the forefoot of the wolf. In the latter case, since the whole shape of the wolf will be recognized even in night, the intimidating effect can be increased. The number of the LED elements used as for the light emitting unit 10 may be appropriately changed as necessary. However, if the number of the LED elements is less than two where the light flux will be less than 120 lumen, it is too dark and the wild animal is hard or impossible to perceive the light from the repulsing apparatus . The emitting unit 10 is controlled to blink or flash on and off at a frequency of 18-24 Hz by the control unit 60. The blinking frequency of the light emitting unit 10 is desired to be near 21 Hz. That is, the light emitting unit 10 is more effective to blink on and off at the frequency near 21 Hz. The blinking light emission of the light emitting unit 10 is controlled as well as the sound generation of the sound generation unit 20 so that the operations of these units 10 and 20 are performed at stopping interval of 15 minutes or more when no wild animal is appeared. By controlling individually the blinking of each light emitting unit 10, complicated blinking of light can be attained resulting to prevent the wild animals from becoming used to the blinking. Also, the emission of light color of the light emitting unit 10 may be appropriately set as necessary. Many herbivorous animals are originally nocturnal and thus it is necessary to perceive the green color of grass and tree even in dusky environment in the moonlight. Therefore, such herbivorous animals has high ability to perceive the light in the wavelength range of 400-600 nm. On the other hand, carnivorous animals can perceive the light even in the wavelength range of 600 nm or more. Thus, in order that the light is effectively perceived by the both kinds of the animals, the emission wavelength of light of the LED element as the light emitting unit 10 is desirable in the range of 400-600 nm.

The sound generation unit 20 generates intimidating sound used to threaten the wild animals, and has for example a sound and light generation portion 21 and a sound data memory portion 62 for storing a plurality of sound data of the intimidating sound. As for each sound and light generation portion 21, a speaker and an LED element are provided, for example. This sound and light generation portion 21 may be arranged, for example, in a throat part of the mouth of the wolf, or in a foot support member such as a forefoot of the wolf. The sound and light generation portion 21 is configured to be able to generate intimidating sound of 80 dB or more. Kinds (patterns) of the intimidating sound generated from the sound and light generation portion 21 may be changed at random by a sound control portion 64 of the control unit 60 so that the wild animals hate the sound and are prevented from becoming used to the sound. By blinking the light and generating such intimidating sound, it is possible to provide higher repellent effect. According to proof experiments (experiments using the deer), poor repellent effect was obtained by using the intimidating sound of less than 80 dB. Whereas deer of 90% or more were repelled by using the intimidating sound of 80 dB or more. Furthermore, deer of 100% were repelled by using the intimidating sound of 90 dB. As for the intimidating sound, a non-ordinariness sound such as a passage sound of a racing car, a sound of a jet airplane, and a sound of a chain saw have high repellent effect (more than 80%) of the wild animals. In this case, the volume of the sound should be 80 dB or more. Note that the sound generation unit 20 according to the present invention is configured to generate sounds of 20 kHz or less.

The appearance providing unit 30 has an outer shape resembling in appearance of a wolf and is configured that a head portion of the wolf can turn or swing around at an angle of 10 degrees or more. The light emitting unit 10 is arranged so that the light therefrom is emitted outside the appearance providing unit 30. That is, for example, two of the light emitting elements (of the light emitting unit 10) are located at the position of the eyes of the wolf so that these two light emitting elements are simulated as the eyes of the wolf. In the appearance providing unit 30, both the sound generation unit 20 and the control unit 60, or only the control unit 60 are mounted. The head of the wolf is configured to turn in the right and left directions or the top and bottom directions when the light emitting unit 10 and the sound generation unit 20 are operating. The head of the wolf is driven to turn by a motor or motors. According to the proof experiments, if the movable angle of the head of the wolf was small, it was difficult for the wild animals to recognize that the head of the wolf was moved.

The movement unit 40 is configured that the appearance providing unit 30 mounted on this movement unit 40 can turn or straightly move. This movement unit 40 is for example driven to turn or swing around a predetermined axis (not shown) or to move along a predetermined rail (not shown) by a drive device such as a motor or motors. In modification, wheels may be attached to a foot portion of the appearance providing unit 30, and the wild animal repulsing apparatus may be run itself along a programed optional route like an animal robot.

The sensing unit 50 detects approach of a wild animal or wild animals so that the wild animal repulsing apparatus 100 operates when the approach is detected. This sensing unit 50 uses, for example, an infrared sensor for detection. When the wild animal intruded into a perception range is detected by this infrared sensor, the light emitting unit 10 is blinked with a pattern controlled by the control unit 60 and an intimidating sound is generated by the sound generation unit 20. The sensing unit 50 is arranged in the region for easily sensing the wild animals, for example, at the position of the eyes of the wolf or on the head of the wolf. However, the sensing unit 50 may be arranged at the different positions using a plurality of infrared sensors. It is possible to use, as for the sensing unit 50, a higher sensitive sensor or sensor system to perform quicker detection of the wild animals in a wider area. Thereby an area of the farm land to be defensed by a single wild animal repulsing apparatus 100 can be enlarged.

The control unit 60 has as shown in FIG. 3, a blinking pattern memory portion 61 for storing a plurality of blinking patterns, the sound data memory portion 62 for storing a plurality of sound data of the intimidating sound, a blinking control portion 63 for controlling blinking of the light emitting unit 10, the sound control portion 64 for controlling the sound of the sound generation unit 20, a movement control portion 65 for controlling the movement operation of the movement unit 40, a power source portion 66, a CPU 67, a ROM 68 and a RAM 69.

The blinking pattern memory portion 61 is constituted by ROM, RAM and flash memory, and stores the plurality of blinking pattern data that indicate blinking timings of the light emitting unit 10. The blinking pattern data are not limited to the predetermined pattern data stored beforehand in the blinking pattern memory portion 61. As for the blinking pattern data, effective blinking pattern data can be added and stored later depending on the kind of the wild animals.

The sound data memory portion 62 is constituted by a ROM, a RAM and a flash memory, and stores the plurality of sound data of the intimidating sound for threatening the wild animals, supplied from the sound generation unit 20. The intimidating sound includes, for example, sound in 4 or more patterns containing at least one kind of a natural voice (bark) of real wolf, a natural voice (caution cry) of real deer, a natural voice (cry) of real dog, a natural human voice and a sound of gun. The sound data are not limited to the predetermined pattern data stored beforehand in the sound data memory portion 62. As for the sound data, effective sound data can be added and stored later depending on the kind of the wild animals. A recorded real sound (recorded natural voice) or a sound created artificially can be used as the sound data.

The blinking control portion 63 controls to switch at random the blinking pattern adjusted to have a predetermined blinking frequency and stored in the blinking pattern memory portion 61. The blinking control portion 63, for example, selects at random a blinking pattern from a plurality of the blinking patterns and blinks the emitted light depending on the selected pattern. Thereby, the wild animals are prevented from becoming used to the blinking of the light and durability in the evacuation effects can be obtained. It should be noted that the blinking control portion 63 can perform not only the blinking control for switching at random the blinking patterns but also a blinking control fixed to a predetermined blinking pattern.

The sound control portion 64 controls the intimidating sound generated by the sound generation unit 20. That is, this sound control portion 64 controls the intimidating sound from the sound generation unit 20 so that the intimidating sound with 80 dB or more is generated at stopping interval of 15 minutes or more when no wild animal is appeared. Also, this sound control portion 64 controls to switch at random the intimidating sounds stored in the sound data memory portion 62. The sound control portion 64, for example, selects at random an intimidating sound from a bark of wolf, a caution cry of deer, a cry of dog, a human voice and a sound of gun, and generates the selected sound from the sound generation unit 20. Thereby, the wild animals are prevented from becoming used to the intimidating sound, and durability in the evacuation effects can be obtained. It should be noted that the sound control portion 64 can perform not only the sound control for switching at random the intimidating sounds but also a sound control fixed to a predetermined intimidating sound.

The movement control portion 65 controls to move the movement unit 40 in a predetermined area when the light emitting unit 10 and the sound generation unit 20 are in operation. By moving the appearance providing unit 30 that has an outer shape resembling in appearance of the wolf and has the light emitting unit 10 and the sound generation unit 20 arranged thereon, to provide motion in the apparatus, it is possible to threaten the wild animals more realistically. The movement of the movement unit 40 may be a turning movement, a straight movement, or the movement on an optional route programmed.

The power source portion 66 supplies electricity to the wild animal repulsing apparatus 100. The power source portion 66 may be configured for example by a solar photoelectric generation system with solar panels. If the solar photoelectric generation system is used, the wild animal repulsing apparatus 100 can be installed in a place with no electricity. In modifications, as for the power source portion 66, batteries or an outside power source may be used instead of the solar photoelectric generation system.

The CPU 67 controls, according to a control program stored in the ROM 68, overall operations of the wild animal repulsing apparatus 100 while using the RAM 69 as a work area.

In this embodiment, it is desired that the operation period of time of the light emitting unit 10 and the sound generation unit 20 controlled respectively by the blinking control portion 63 and the sound control portion 64 is controlled around 30 to 60 seconds, and the stopping period of time (stopping interval) is 15 minutes or more. According to the proof experiments, there occurred a phenomenon where a deer approached due to the learning of the wild animals when the stopping interval was 5-10 minutes. However, if the stopping interval was 15 minutes or more, the evacuation effects was continued more than 5 years. More desirably, the stopping interval should be 30 minutes.

Hereinafter, proof experiment results with respect to volume of the intimidating sound, kind of the intimidating sound and stopping interval of the generated sound and the emitted light of the wild animal repulsing apparatus 100 according to this embodiment will be described.

A proof experiment with respect to the volume of the sound was performed under the next conditions. In a farm of approximately 50 m × 50 m, the experiment was conducted with 10 Yezo sika deer (Cervus hortulorums) . The light emitting unit 10 blinked at the frequency of 21 Hz with a constant amount of light, and the sound generation unit 20 generated the intimidating sound of the wolf only with the sound volumes in four patterns of 60dB, 70dB, 80dB and 90dB. The result of the experiment is shown in Table 1. Namely, 30 % of the deer were repelled at the intimidating sound of 60dB, 50% of deer were repelled at the intimidating sound of 70dB, 90% of deer were repelled at the intimidating sound of 80dB, and 100% of deer were repelled at the intimidating sound of 90dB.

**Table 1**

| VOLUME OF SOUND | 60 dB | 70 dB | 80 dB | 90 dB |
|---|---|---|---|---|
| REPELLING EFFECT | 30 % | 50 % | 90 % | 100 % |

A proof experiment with respect to the kind of the intimidating sound was performed under the next conditions. In a farm of approximately 50 m × 50 m, the experiment was conducted with 10 Yezo sika deer (Cervus hortulorums) . The light emitting unit 10 blinked at the frequency of 21 Hz with a constant amount of light, and the sound generation unit 20 generated the intimidating sound with the sound volume of 80 dB. The sound generation unit 20 generated three kinds of the intimidating sounds of (1) a constant frequency sound, (2) a complex frequency sound (sound combined by cry of dog and sound of gun), and (3) a bark of wolf only. The result of the experiment is shown in Table 2. Namely, (1) in case of the constant frequency sound, 80 % of deer were repelled on the first day, 50 % of deer were repelled on 5 days after, 20 % of deer were repelled on 10 days after, and 0 % of deer were repelled on 20 days after. (2) In case of the complex frequency sound, 100 % of deer were repelled on the first day, 100 % of deer were repelled on 5 days after, 100 % of deer were repelled on 10 days after, and 100 % of deer were repelled on 20 days after. (3) In case of the bark of wolf only, 90 % of deer were repelled on the first day, 100 % of deer were repelled on 5 days after, 100 % of deer were repelled on 10 days after, and 100 % of deer were repelled on 20 days after. According to an additional experiment, the evacuation effects was excellent when complex sound of a bark of wolf and a constant frequency sound of 15 kHz was used as the intimidating sound.

**Table 2**

| REPELLING EFFECT | FIRST DAY | 5 DAYS AFTER | 10 DAYS AFTER | 20 DAYS AFTER |
|---|---|---|---|---|
| CONSTANT FREQUENCY SOUND | 80 % | 50 % | 20 % | 0 % |
| COMPLEX FREQUENCY SOUND | 100 % | 100 % | 100 % | 100 % |
| WOLF SOUND | 90 % | 100 % | 100 % | 100 % |

A proof experiment with respect to the stopping interval of the emitted light and the intimidating sound was performed under the next conditions. In a farm of approximately 50 m × 50 m, the experiment was conducted with 10 Yezo sika deer (Cervus hortulorums). The light emitting unit 10 blinked at the frequency of 21 Hz with a constant amount of light, and the sound generation unit 20 generated the intimidating sound of the wolf only with the sound volume of 80 dB. The light emitting unit 10 and the sound generation unit 20 generated the light and the intimidating sound for a period of 30 seconds and stopped for stopping intervals of (1) 5 minutes, (2) 15 minutes, and (3) 30 minutes. The result of the experiment is shown in Table 3. Namely, (1) in the case of the stopping interval of 5 minutes, 90 % of deer were repelled on the first day, 50 % of deer were repelled on 5 days after, and 20 % of deer were repelled on 10 days after. (2) In the case of the stopping interval of 15 minutes, 90% of deer were repelled on the first day, 80 % of deer were repelled on 5 days after, and 80 % of deer were repelled on 10 days after. (3) In the case of the stopping interval of 30 minutes, 90% of deer were repelled on the first day, 100 % of deer were repelled on 5 days after, and 100 % of deer were repelled on 10 days after.

**Table 3**

| REPELLING EFFECT | FIRST DAY | 5 DAYS AFTER | 10 DAYS AFTER |
|---|---|---|---|
| STOPPING INTERVAL OF 5 MINUTES | 90 % | 50 % | 20 % |
| STOPPING INTERVAL OF 15 MINUTES | 90 % | 80 % | 80 % |
| STOPPING INTERVAL OF 30 MINUTES | 90 % | 100 % | 100 % |

A further experiment with respect to the wavelength of the light of the LED element was performed under the next conditions. In a farm of approximately 50 m × 50 m, the experiment was conducted with 10 Yezo sika deer (Cervus hortulorums). The light emitting unit 10 blinked at the frequency of 21 Hz with a constant amount of light, and the sound generation unit 20 generated the intimidating sound of the wolf only with the sound volume of 80 dB. The result of the experiment is as follows. In case of a light of 400-600 nm, 100 % of deer were repelled (100 % of deer were repelled in the five experiments). In case of a light of 400-750 nm, 96 % of deer were repelled (100 % of deer were repelled in three of five experiments, and 90 % of deer were repelled in the remaining two experiments).

As aforementioned in detail, the wild animal repulsing apparatus 100 of this embodiment has the light emitting unit 10, the sound generation unit 20, the appearance providing unit 30, the movement unit 40, the sensing unit 50 and the control unit 60. Since the light emitting unit 10 is blinked at frequency of 18-24 Hz and the sound generation unit 20 generates the intimidating sound with 80 dB or more at the stopping interval of 15 minutes or more, it is possible to reduce the setting cost of the wild animal repulsing apparatus and to effectively intimidate and repel the wild animals. Also, because the learning (becoming used) of the wild animals is prevented, the intimidating and evacuation effects can be continued for a long time. Particularly, since the light emission and the sound generation of the light emitting unit 10 and the sound generation unit 20 are temporally stopped for the stopping interval of 15 minutes or more, the intimidating and evacuation effects and continuousness of the effect are extremely improved.

Also, according to the wild animal repulsing apparatus 100 of this embodiment, since the appearance providing unit 30 has an outer shape resembling in appearance of the wolf and has a head portion of the wolf, which is provided with two light emitting elements as the eye and is capable of turning or swinging a head portion in an angle range of 60-120 degrees, intimidating and evacuation effects against the wild animals from the front and also the durability of the effect can be improved.

Further, according to the wild animal repulsing apparatus 100 of this embodiment, since the movement unit 40 is controlled to provide motion to the apparatus as an animal robot, it is possible to more realistically and more closely threaten the wild animals. Thus, intimidating and evacuation effects against the wild animals and also the durability of the effect can be improved. That is, intimidating and evacuation effects in a wide area can be expected.

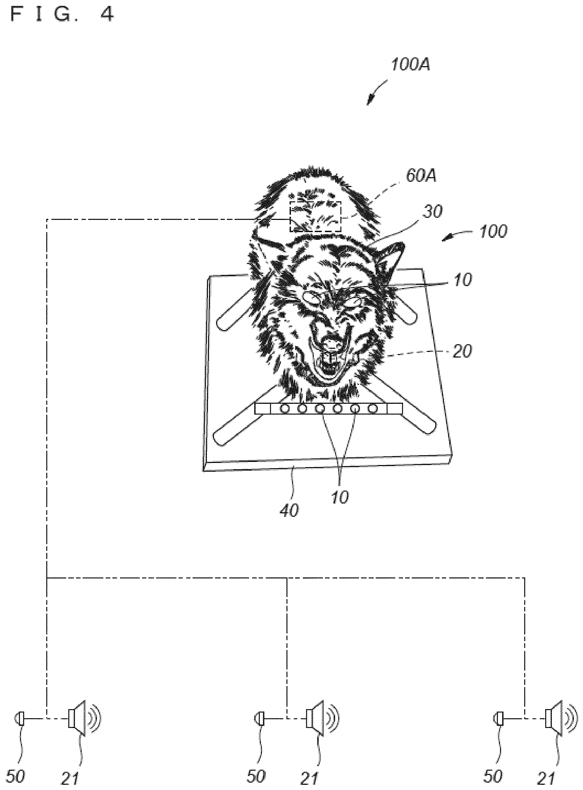

FIG. 4 schematically illustrates constitution of a wild animal repulsing apparatus 100A in another embodiment according to the present invention.

As shown in FIG. 4, the wild animal repulsing apparatus 100A has the wild animal repulsing apparatus 100, a plurality of sound and light generation portions 21, and a plurality of sensing units 50. In this case, the plurality of sound and light generation portions 21 and the plurality of sensing units 50 are respectively installed at different points in a predetermined area (with an interval of several hundred meters for example) apart from the wild animal repulsing apparatus 100. A control unit 60A is configured to operate the light emitting unit 10 and the sound generation unit 20 when one of the plurality of sensing units 50 detects approaching of the wild animal. Thereby, intimidating and evacuation effects in a wider area can be provided.

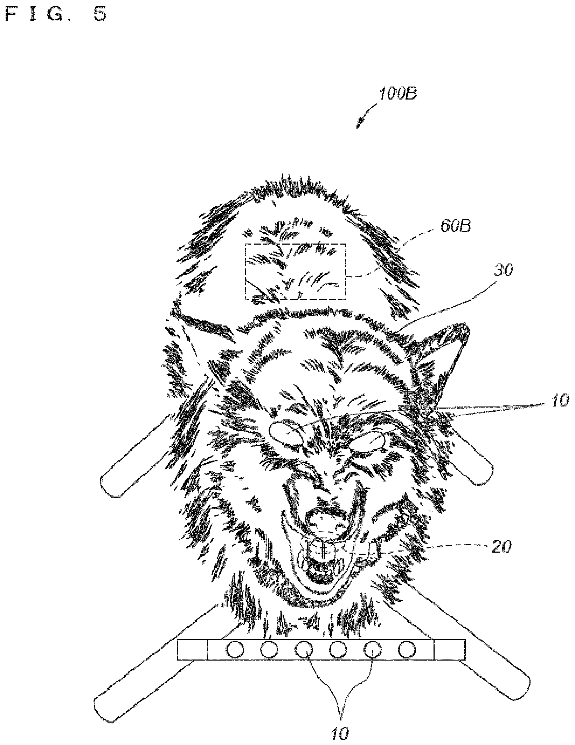

In the aforementioned embodiment, the wild animal repulsing apparatus 100 has the movement unit 40. However, the present invention is not limited to this. Thai is, for example, no movement unit may be provided as shown in FIG. 5. The wild animal repulsing apparatus 100B shown in FIG. 5 is fixed on a place with no movement unit. In the wild animal repulsing apparatus 100B, a control unit 60B has the blinking pattern memory portion 61 for storing a plurality of blinking patterns, the sound data memory portion 62 for storing a plurality of sound data of the intimidating sound, the blinking control portion 63 for controlling blinking of the light emitting unit 10, the sound control portion 64 for controlling the sound of the sound generation unit 20, and the power source portion 66. Namely, the control unit 60B has no movement control portion for controlling the movement operation.

Also, in the aforementioned embodiment, the wild animal repulsing apparatus 100 has the light emitting unit 10 with the LED elements and the control unit capable of working in an environment of -5 °C or less. However, the present invention is not limited to this. That is, in districts other than the cold districts, a control unit including normal commercial LED elements rather than cold districts specifications may be used.

Even more particularly, in the aforementioned embodiment, the wild animal repulsing apparatus 100 has the appearance providing unit 30 with an outer shape resembling in appearance of a wolf. However, the present invention is not limited to this. That is, the appearance providing unit may have an outer shape resembling in appearance of a tiger, a dog or so on.

Furthermore, in the aforementioned embodiment, the wild animal repulsing apparatus 100 has the movement unit 40 configured to turn or straightly move in the predetermined area. However, the present invention is not limited to this. That is, the wild animal repulsing apparatus 100B may be mounted on and moved with for example a crawler instead of the movement unit 40.

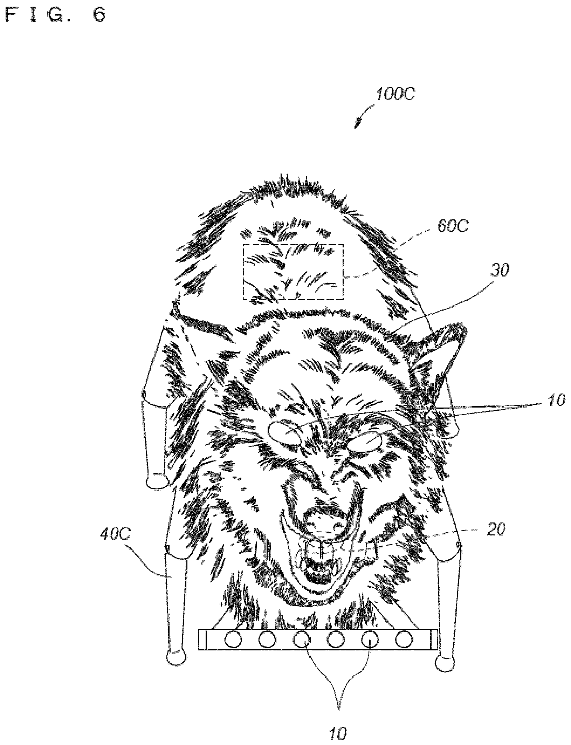

In modifications, the movement unit 40 of the wild animal repulsing apparatuses 100 and 100A of these embodiments may be configured to run itself like an animal robot using a four-legs walking robot. In the case of the wild animal repulsing apparatus 100C shown in FIG. 6, for example, a movement unit 40C is configured by the four-legs walking robot capable of walking as the animal robot. A control unit 60C controls the movement unit 40C. Thereby, real movement like the wolf that is the natural enemy of many wild animals can be provided to increase effects of dangerous recognition to the wild animals. That is, the efficient effects of the wild animal repulsing apparatus can be further improved.

Further, in the aforementioned embodiments, the wild animal repulsing apparatuses 100 and 100A detect approaching of the wild animals by the sensing unit 50 to blink light by the light emitting unit 10 and to generate intimating sound by the sound generation unit 20. However, the present invention is not limited to this. That is, for example, a working time and a stopping time of the light emitting unit 10 and the sound generation unit 20 may be set and controlled by a timer without using the sensing unit 50, or both the control using the sensing unit 10 and the control using the timer may be performed.

Still further, in the embodiments of the wild animal repulsing apparatuses 100, 100A and 100B, a bad smelling unit for emitting a bad smell from which the wild animals feel dangerous and have hatred may be additionally provided. This bad smelling unit is for example installed in the inside (in a body member) of the appearance providing unit 30 so as to emit or inject the bad smell around. In modifications, a plurality of bad smelling units may be installed with the plurality of sensing units 50 of the wild animal repulsing apparatus 100A, at different points in a predetermined area (with an interval of several hundred meters for example) apart from the wild animal repulsing apparatus 100. Smell is important sense for the wild animals to judge whether it is dangerous and whether it is edible. The bad smell from which the wild animals feel dangerous and have hatred may contain for example a dangerous and hatred smell represented by a natural enemy smell such as a wolf and a gunpowder smell such as a smell of the guns, and a dangerous smell other than natural enemy smell such as a putrid odor, an irritating odor and a poison smell. The bad smell may also contain a smell of other animals, from which the wild animals may feel that it is a territory of the other animals and avoid a futile fight by instinct. Thereby, it is possible to make the wild animals the aversion learning resulting to have more improved evacuation effects. By combining the light, the sound and the bad smell, it is possible to more strengthen the evacuation effects.

A proof experiment with respect to the wild animal repulsing apparatus having the bad smell unit was performed under the next conditions. In a farm of approximately 50 m × 50 m, the experiment was conducted with 10 Yezo sika deer (Cervus hortulorums). The light emitting unit 10 blinked at the frequency of 21 Hz with a constant amount of light with the main wavelength of 400-600 nm, the sound generation unit 20 generated the intimidating sound of the wolf only with the sound volume of 80 dB, and the bad smelling unit emitted the bad smell of a gunpowder smell. The result of the experiment is as follows. In case of emitting the gunpowder smell, 100 % of deer were repelled on the first day, and 100 % of deer were repelled on 5 days after (100 % of deer were repelled in five of five experiments). In case of emitting no gunpowder smell, 100 % of deer were repelled on the first day, and 98 % of deer were repelled on 5 days after (100 % of deer were repelled in four of five experiments, and 90 % of deer were repelled in the remaining one experiment). Thus, evacuation effects can be strengthened by using the bad smell (gunpowder smell).

In the aforementioned embodiments, the wild animal repulsing apparatuses 100, 100A, 100B and 100C may additionally have a monitoring camera and various environmental sensors for measuring temperature, humidity, wind velocity, atmospheric pressure, illuminance, ultraviolet rays, acceleration, sound pressure, rainfall, snowfall, powder dust or radioactivity. The monitoring pictures of the monitoring camera and the data of the various environmental sensors can be utilized as remote monitoring systems for monitoring growing conditions and health state of farm products or the domestic animals, and for judging damage situation at the time of disaster. These data gathered and variously analyzed can contribute to improve efficiency and labor saving of the growth management of farm products and/or the rearing management of domestic animals. It is possible to analyze the best setting positions of the wild animal repulsing apparatus and the sensors by managing the frequency of the wild animal approaching and tendency from the pictures and the data. As a result, the effectiveness of the wild animal repulsing apparatus of the present invention can be thereby evaluated objectively. By managing these data at the cloud, the data can be watched and used for management at anywhere and anytime. Therefore, it is possible to perform effective management by the owner of the wild animal repulsing apparatus.

Many widely different embodiments of the present invention may be constructed without departing from the spirit and scope of the present invention. It should be understood that the present invention is not limited to the specific embodiments described in the specification, except as defined in the appended claims.

### INDUSTRIAL APPLICABILITY

The present invention can be utilized for intimidating and repulsing wild animals appearing frequently in agriculture cultivated areas, ranches or villages.

### DENOTATION OF REFERENCE NUMERALS

10: light emitting unit
20: sound generation unit
21: sound and light generation portion
30: appearance providing unit
40, 40C: movement unit
50: sensing unit
60, 60A, 60B, 60C: control unit
61: blinking pattern memory portion
62: sound data memory portion
63: blinking control portion
64: sound control portion
65: movement control portion
66: power source portion
67: CPU
68: ROM
69: RAM
100, 100A, 100B, 100C: wild animal repulsing apparatus

## Claims

1. A wild animal repulsing apparatus for intimidating and repulsing wild animals appearing in agriculture cultivated areas, ranches or villages, comprising:
a light emitting unit having a plurality of light emitting elements;
a sound generation unit for generating intimidating sound used to threaten the wild animals;
a control unit for controlling light emitting operations of said light emitting unit and sound generating operations of said sound generation unit; and
an appearance providing unit having an outer shape resembling in appearance of an animal and being capable of arranging so that two of said light emitting elements are appeared as eyes of the animal,
wherein said control unit controls said light emitting unit to blink the plurality of light emitting elements at a frequency of 18-24 Hz, and controls said sound generation unit so as to generate the intimidating sound with 80 dB or more at stopping interval of 15 minutes or more when no wild animal is appeared.

2. The wild animal repulsing apparatus as claimed in claim 1, wherein said appearance providing unit has an outer shape resembling in appearance of a wolf and is configured to be capable of turning a head portion of the wolf in an angle range of 60-120 degrees.

3. The wild animal repulsing apparatus as claimed in claim 1 or 2, wherein said apparatus further comprises a movement unit for moving said appearance providing unit mounted thereon, and wherein said control unit controls to move said movement unit.

4. The wild animal repulsing apparatus as claimed in any one of claims 1 to 3, wherein said apparatus further comprises at least one sensing unit to detect appearance of the wild animal, and wherein said control unit is configured to operate said light emitting unit and said sound generation unit when the wild animal was detected by the at least one sensing unit.

5. The wild animal repulsing apparatus as claimed in any one of claims 1 to 4, wherein said light emitting unit comprises a control system including LED elements capable of working in an environment of -5 °C or less.

6. The wild animal repulsing apparatus as claimed in any one of claims 1 to 5, wherein said sound generation unit is capable of producing sound in four or more patterns including at least one kind of a bark of wolf, a caution cry of deer, a cry of dog, a human voice and a sound of gun.

7. The wild animal repulsing apparatus as claimed in any one of claims 1 to 6, wherein said light emitting unit comprises LED elements with a light emission wavelength in a range of 400-600 nm.

8. The wild animal repulsing apparatus as claimed in any one of claims 3 to 7, wherein said movement unit comprises a four-legs walking robot.

9. The wild animal repulsing apparatus as claimed in any one of claims 1 to 8, wherein said apparatus further comprises at least one of a camera and environmental sensors for measuring temperature, humidity, wind velocity, atmospheric pressure, illuminance, ultraviolet rays, acceleration, sound pressure, rainfall, snowfall, powder dust and radioactivity, so as to perform growth management or rearing management when no wild animal appears.
